# EUROPEAN PATENT APPLICATION

(11) **EP 4 607 367 A1**
(43) Date of publication of application: **27.08.2025**
(21) Application number: 25158735.8
(22) Date of filing: 19.02.2025
(51) Int. Cl.: G06F 16/25, G05D 1/00, G06F 9/54, G06F 18/25, G06N 20/00, B60W 50/00

(54) **SYSTEMS AND METHODS FOR SOFTWARE DEFINED SYSTEMS INTEGRATION**

(30) Priority: 20.02.2024 US 202463555710 P
(71) Applicant: Palantir Technologies Inc., Denver, CO 80202 (US)
(72) Inventor: KREMIN, Samuel, Arlington (US); RICHBOURG, Christopher, Arlington (US); RUDD, Shelby, Arlington (US); RASMUSSEN, Benjamin, Arlington (US); HAKE, Susanne, Arlington (US); CHOUNG, Bryant, Arlington (US)
(74) Representative: Sayer, Robert David

(57) **Abstract**

In some examples, systems and methods for systems integration are provided. For example, a method includes: receiving a first data asset in a first data format from a first data source; receiving a second data asset in a second data format from a second data source, the second data format being different from the first data format, the second data source being different from the first data source; performing a correlation process to merge the first data asset in the first data format and the second data asset in the second data format to generate a unified data asset in a common data format, the common data format being different from the first data format, the common data format being different from the second data format; and providing the unified data asset in the common data format to a plurality of software applications.

## Description

This application claims priority U.S. Provisional Application No. 63/555,710, filed February 20, 2024.

### TECHNICAL FIELD

Certain embodiments of the present disclosure relate to systems integration. More particularly, some embodiments of the present disclosure relate to systems integration using integration software modules.

### BACKGROUND

Systems integration is a type of services provided by engineers. For example, system engineers collect the system configurations and requirements, and develop and deploy customized software code to complete the customized systems. In some examples, developing customized software code can be time consuming and/or resource intensive.

Hence, it is desirable to improve techniques for systems integration.

### SUMMARY

Certain embodiments of the present disclosure relate to systems integration. More particularly, some embodiments of the present disclosure relate to systems integration using integration software modules.

At least some embodiments are directed to a method for systems integration. In certain embodiments, the method includes: receiving a first data asset in a first data format from a first data source; receiving a second data asset in a second data format from a second data source, the second data format being different from the first data format, the second data source being different from the first data source; performing a correlation process to merge the first data asset in the first data format and the second data asset in the second data format to generate a unified data asset in a common data format, the common data format being different from the first data format, the common data format being different from the second data format; and providing the unified data asset in the common data format to a plurality of software applications.

At least certain embodiments are directed to a system for systems integration. In some embodiments, the system includes: one or more memories comprising instructions stored thereon; and one or more processors configured to execute the instructions and perform operations comprising: receiving a first data asset in a first data format from a first data source; receiving a second data asset in a second data format from a second data source, the second data format being different from the first data format, the second data source being different from the first data source; performing a correlation process to merge the first data asset in the first data format and the second data asset in the second data format to generate a unified data asset in a common data format, the common data format being different from the first data format, the common data format being different from the second data format; and providing the unified data asset in the common data format to a plurality of software applications.

At least some embodiments are directed to a non-transitory computer readable storage medium including instructions for systems integration that, when executed by one or more processors, cause the one or more processors to perform operations comprising: receiving a first data asset in a first data format from a first data source; receiving a second data asset in a second data format from a second data source, the second data format being different from the first data format, the second data source being different from the first data source; performing a correlation process to merge the first data asset in the first data format and the second data asset in the second data format to generate a unified data asset in a common data format, the common data format being different from the first data format, the common data format being different from the second data format; and providing the unified data asset in the common data format to a plurality of software applications.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

Figure 1 is an illustrative systems integration operating environment 100 according to certain embodiments of the present disclosure.
Figure 2 is an illustrative systems integration operating environment 200 according to certain embodiments of the present disclosure.
Figure 3 is an illustrative example of data fusion and correlation process according to certain embodiments of the present disclosure.
Figure 4 is a simplified diagram showing a method 400 for systems integration using software defined systems integration modules according to certain embodiments of the present disclosure.
Figure 5 is a simplified diagram showing a computing system for implementing a system for systems integration in accordance with at least one example set forth in the disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any number within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods are often deployed as a customized single system including data ingestions. For example, a system for object tracking would ingest data received from a radar sensor to identify the object location. As an example, another system for object tracking would ingest data received from an imaging sensor to identify the object location. Conventional systems and methods include service-based integrations to incorporate data sources and applications. Conventional systems and methods typically cannot ingest data from a previously unknown data source (e.g., data in a previously unknown data format). Additionally, conventional systems and methods typically cannot provide data to a previously unknown application.

For example, conventional systems typically use applications (e.g., components) mapped one-to-one (1:1) with inputs and outputs. As an example, operating brakes in a traditional automobile is a simple, fault-tolerant operation because brakes have a single requirement and receive a single message type - pedal pressure. However, inefficiency and risk quickly mount as this architecture is applied against integrated systems that rely on multimodal data from many sources. In some embodiments, sustaining separate transformation pipelines for each application strains compute resources and can lead to increased confusion as different applications reach separate conclusions due to minor differences in processing between pipelines.

Additionally, conventional systems may have several deficiencies, such as: 1) inefficiencies multiply through a wide range of codebase maintenance and manual data and software integration; 2) limited interoperability due to a wide variety of open standards. Untenable computational requirements from duplicative data processing workflows; 3) systemwide confusion without a singled unified data source (e.g., a single source of truth), as different applications pull from different data sources, compromising alignment; and/or 4) vendor lock-in risks without visibility into and validation of data formats (e.g. standard formats).

Various embodiments of the present disclosure can achieve benefits and/or improvements over conventional systems, for example by avoiding or mitigating the above deficiencies by using a software defined systems integration (SDSI) framework (e.g., software module), also referred to as an SDSI module (e.g., software module), for example, allowing unified data ingestion and services. In some embodiments, the SDSI framework can continuously integrate a system's disparate data, hardware, and software into a cohesive capability - while also onboarding new hardware and software components. In certain embodiments, the SDSI framework includes a mechanism to bridge the gap between various data formats (e.g., open standard data formats) and plug-and-play modularity.

In certain embodiments, the systems and methods can ingest data from various formats across various data sources and provide a universal view of the operating environment to all available systems rather than relying on each system to make sense of multiple feeds on its own. In some embodiments, these advancements benefit not only software capabilities which consume onboard data directly, but also hardware capabilities, which include software, data, and artificial intelligence (AI) subcomponents that must be integrated within the platform.

According to certain embodiments, systems and methods of the present disclosure include software frameworks (e.g., software modules) for software defined systems integration (SDSI). In some examples, the SDSI software modules, also referred to as SDSI frameworks, leverages the efficiencies of software to enable the rapid integration of any collection of capabilities onto any platform. In certain embodiments, a software framework includes one or more software modules and one or more data repositories. In some embodiments, an SDSI framework (e.g., SDSI module) can be applied to hardware as well as software, with hardware including their own software, data, and/or artificial intelligence (AI) components that will require integration into broader systems. In certain embodiments, an SDSI module abstracts away different specific data formats (e.g., data standards, open standards) to conform all available information to a configurable, universal open language (e.g., a language for defining a configuration) that is specific to an organization and/or an industry (e.g., a government organization, a retail industry, a healthcare industry, etc.). In some embodiments, systems and methods using SDSI frameworks (e.g., SDSI modules) can have unified data assets to inform a unified view across systems. In certain embodiments, a data asset refers to a dataset in various formats, such as structured format (e.g., tabular format, database, data table, data object, etc.) and/or unstructured formats (e.g., in natural language, etc.). For example, a data asset may refer to a dataset representing sensor data produced by a sensor.

According to some embodiments, developing next-generation capability for one or more platforms requires a software-centric approach for procuring, upgrading, integrating, and delivering a complex collection of capabilities required for changing deployment and/or usage conditions. In certain embodiments, the systems and methods use open standards and modularity. In some embodiments, an open standard refers to an open standard for data to access, use, share, and/or other operations. In certain embodiments, systems can be complex and include an expansive web of dependencies. In certain embodiments, open standards alone are insufficient for managing the complexity and enforcing modularity to drive differentiated capability.

In some embodiments, the traditional approach of services-oriented systems integration is no longer sufficient for a number of reasons, such as: 1) costs for future enhancements, upgrades, or changes are difficult to forecast; 2) services-based systems integration takes too long to be relevant to a rapidly changing software baseline, as it requires significantly more work to implement updates or changes and also potentially affects more components/teams rather than isolating updates to a single team/component; 3) services-based systems integrators lack the expertise in managing the software, data, and artificial intelligence (AI) that comprise next generation capabilities, which makes changes to any of the data, software, or AI components infeasible from a cost and timing perspective; 4) traditional systems integration does not adequately account for the ongoing systems integration required to maintain a constantly upgrading software baseline, data environment, or AI ecosystem; 5) not accounting for AI, data, and continuous deployment - next generation systems are dynamic, particularly in terms of data models, improving AI models; 6) inefficient compute utilization - traditional system of systems architecture requires each sensor and application to pull information from the data bus in potentially different open formats. Required data is transformed in separate pipelines for each application's consumption. These largely duplicative cleaning and fusion processes quickly add unnecessary complexity; 7) inconsistent integration - sustaining separate data transformation pipelines for each application can lead to increased confusion when different applications come to separate conclusions because of minor differences in how data was processed by each siloed pipeline; and/or 8) some components cannot be updated because the original author does not support the component..

In some embodiments, to address the above challenges in conventional systems, systems and methods using one or more software defined systems integration (SDSI) modules can continuously integrate a system's disparate data, hardware, and software into a cohesive capability - while also onboarding new components including new hardware components and new software applications.

According to certain embodiments, the SDSI integration module can include or integrate with one or more data connectors to ingest data of various formats. In some embodiments, a data connector, also referred to as a data adapter, includes a software module to implement a software interface to transmit, receive, process and/or transform data. In certain embodiments, the SDSI module can use a machine learning model. In some embodiments, the SDSI module can use a machine learning model (e.g., a language model, a large language model) to generate the data connectors. In certain examples, a machine learning model can include training data (e.g., a part of training corpus) embedded in the model. In some embodiments, a generative AI (artificial intelligence) model includes training data embedded in the model. In certain embodiments, a generative AI model is a type of AI model that can be used to produce various type of content, such as text, images, videos, audio, 3D (three-dimensional) data, 3D models, and/or the like. In some embodiments, a language model or a large language model (LLM), which is a type of generative AI models, includes content and training data embedded in the model. In certain embodiments, a generative AI model may be subject to greater risk of data leaks with the training data embedded in the model.

According to some embodiments, the machine learning model (e.g., a language model, an LLM, etc.) can be trained using selected corpus (e.g., datasets, source data assets from data sources, sensor data assets from sensors, etc.) for generating software code for the data connectors. In certain embodiments, the machine learning model can be trained using selected corpus in a specific computing language (e.g., C language, C++ language, Java language, Python, etc.) for generating software code for the data connectors. In certain embodiments, training the machine learning model (e.g., LLMs) using one or more selected sets of datasets (e.g., datasets can be accessed under a permission requirement, a segmented training corpus) can reduce the risks of data leak (e.g., prevent data leak). In some embodiments, data includes content such as, for example, text data, image data, video data, music data, audio data, creative content, and/or the like.

In some embodiments, the machine learning model is a language model ("LM") that may include an algorithm, rule, model, and/or other programmatic instructions that can predict the probability of a sequence of words or expressions (e.g., software code). In some embodiments, a language model may, given a starting text string (e.g., one or more words), predict the next word or expression in the sequence. In certain embodiments, a language model may calculate the probability of different word combinations and/or software code based on the patterns learned during training (based on a set of text data from books, articles, websites, audio files, software code, etc.). In some embodiments, a language model may generate many combinations of one or more next words and/or expressions that are coherent and contextually relevant. In certain embodiments, a language model can be an advanced artificial intelligence algorithm that has been trained to understand, generate, and manipulate language (e.g., computing language expressions). In some embodiments, a language model can be useful for natural language processing, including receiving natural language prompts and providing natural language responses based on the text on which the model is trained. In certain embodiments, a language model may include an n-gram, exponential, positional, neural network, and/or other type of model. In some embodiments, a language model can be used to generate software code.

In certain embodiments, the machine learning model is a large language model (LLM), which was trained on a larger data set and has a larger number of parameters (e.g., billions of parameters) compared to a regular language model. In certain embodiments, an LLM can understand more complex textual inputs and generate more coherent responses due to its extensive training. In certain embodiments, an LLM can use a transformer architecture that is a deep learning architecture using an attention mechanism (e.g., which inputs deserve more attention than others in certain cases). In some embodiments, a language model includes an autoregressive language model, such as a Generative Pre-trained Transformer 3 (GPT-3) model, a GPT 3.5-turbo model, a Claude model, a command-xlang model, a bidirectional encoder representations from transformers (BERT) model, a pathways language model (PaLM) 2, and/or the like.

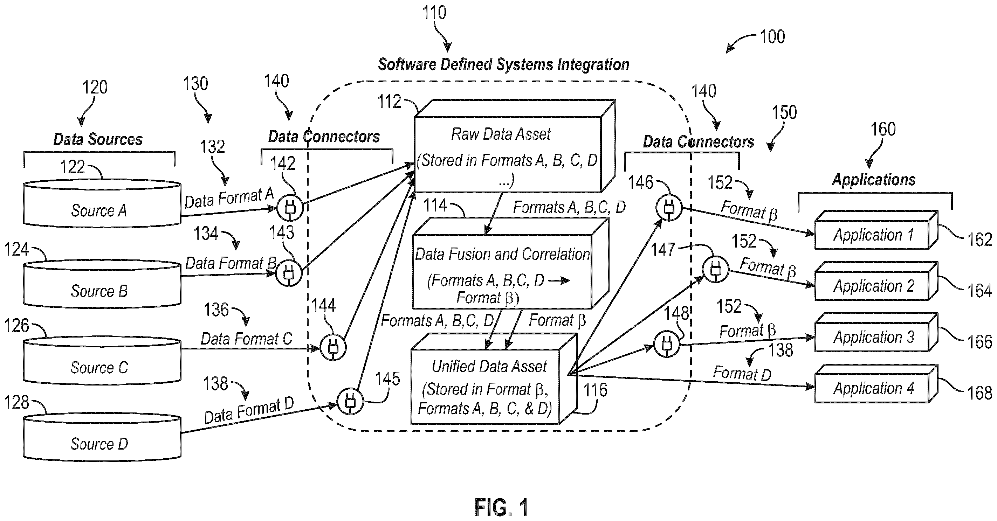

Figure 1 is an illustrative systems integration operating environment 100 according to certain embodiments of the present disclosure. In some embodiments, the systems integration operating environment 100 includes one or more software defined systems integration frameworks (e.g., SDSI modules) 110, one or more data sources 120 (e.g., data source 122, data source 124, data source 126, data source 128, etc.) with corresponding source data formats 130 (e.g., data format 132, data format 134, data format 136, data format 138, etc.), one or more data connectors 140 (e.g., data connector 142, data connector 144, data connector 146, data connector 148, etc.) and one or more software applications 160 (e.g., software application 162, software application 164, software application 166, software application 168, etc.). Although the above has been shown using a selected group of components in the systems integration operating environment 100, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to certain embodiments, the software defined systems integration frameworks (e.g., SDSI modules) 110 can transform (e.g., automatically transform) data stream from varied, distinct source data formats 130 from different data sources 120 into a configurable, open format that is readable by any integration system or application via a data connector (e.g., a specific software interface, a specific application programming interface (API)). In some embodiments, the SDSI frameworks 110 includes at least one selected from a group consisting of a raw data asset repository 112, a data fusion and correlation processor 114, and a unified data asset repository 116.

According to some embodiments, the SDSI software frameworks 110 include a mechanism to bridge the gap between various data formats (e.g., open standards, data standards) and plug-and-play modularity. In certain embodiments, the systems and methods can ingest data of different source data formats 130 across various data sources 120 and provide a universal view of the operating environment to all available systems and/or applications 160 rather than relying on each software application 160 to make sense of multiple feeds on its own. In some embodiments, these advancements benefit not only software capabilities which consume onboard data directly, but also hardware capabilities, which include software, data, and artificial intelligence (AI) subcomponents that must be integrated within the platform.

According to certain embodiments, the SDSI software framework 110 include a raw data asset repository 112 that stores data received from the data sources 120. In some embodiments, the data in the raw data asset repository 112 can be transmitted via the data connectors 140. In certain embodiments, a data connector is a module (e.g., a software module) that transmits data and optionally, implements data transformation from an input data format to an output data format. In some embodiments, the data connectors 140 are integrated with the SDSI framework 110. In certain embodiments, a part (not all) of the data connectors 140 are integrated with the SDSI framework 110. In some examples, the raw data asset repository 112 includes the data asset in the data format 132 received from the data source 122, for example, via the data connector 142. In certain embodiments, the data connector 142 is configured to perform data transmission and/or data transformation.

In certain examples, the raw data asset repository 112 includes the data asset in the data format 134 received from the data source 124, for example, via data connector 143. In some examples, the raw data asset repository 112 includes the data asset in the data format 136 received from the data source 126, for example, via the data connector 144. In certain examples, the raw data asset repository 112 includes the data asset in the data format 138 received from the data source 128, for example, via data connector 145. In certain embodiments, each of the data connector 140 is configured to perform data transmission and/or data transformation.

In some examples, the conventional systems use manual integration, including relying on software code (e.g., glue code) based on non-recurring engineering (NRE) for software integration, which can impede rapid, cost-effective capability. In certain examples, the conventional systems may require each system independently perform the necessary cleaning, correlating, and reasoning to turn potentially many different data formats into a coherent view of the data. Even with data standards (e.g., open standards), numerous variations of data formats prevent data of various data sources from being interoperable without further processing.

In some examples, in the conventional systems, most new data sources require additional data transformations to feed applications from the data interface, significantly increasing computational needs. In certain examples, these repetitive yet separate workflows create potentially asymmetric situational awareness between systems within the same platform. In some examples, validating standards and compliance remains difficult - limitations often are not discovered until integration is underway. In certain examples, without verifying adherence to the required applications, the risk of vendor lock (e.g., cannot use the data from the vendor) remains.

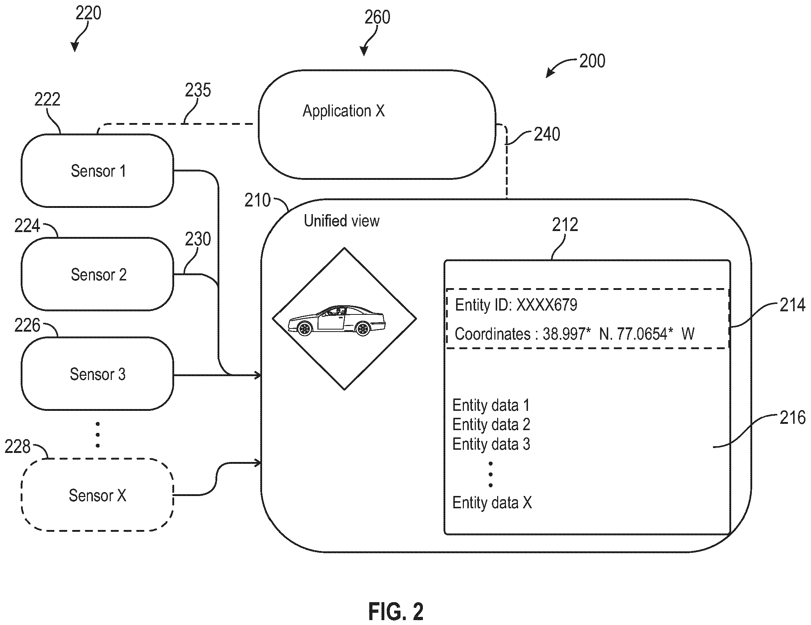

According to some embodiments, the SDSI frameworks 110 can enable rapid integration and sustainment of any collection of capabilities onto a software platform, for example, via the data fusion and correlation done by the data fusion and correlation processor 114. In certain embodiments, the SDSI frameworks 110 can abstract away different data formats (e.g., open standard data formats) to conform data and information to a unified data asset in a common data format 152 (e.g., a configurable data format, format β, etc.). In some embodiments, one example of the common data format 152 is illustrated as the data format 212 in Figure 2. In certain embodiments, the common data format 152 includes one or more core data fields (e.g., entity ID, unified geospatial data, etc.), for example, associated with an entity (e.g., an object). In some embodiments, the common data format 152 includes data representing the entity (e.g., image embeddings, radar signature, etc.) generated and/or extracted from one or more data asset from one or more data sources.

In certain embodiments, the data fusion and correlation processor 114 is configured to determine a plurality of data assets associated with an entity, for example, based upon one or more object parameters. In certain embodiments, the one or more object parameters include at least one selected from a group consisting of a location parameter, a geospatial parameter, a temporal parameter, a speed parameter, an orientation parameter, a movement parameter, a shape parameter, a spectrum parameter, an object image parameter, and/or the like. In some examples, the data fusion and correlation processor 114 is configured to determine that the data asset from the data source 122, the data asset from the data source 124, the data asset from the data source 126, and the data asset from the data source 128 are associated with the same entity (e.g., a vehicle, a ship, etc.). In certain examples, the data fusion and correlation processor 114 is configured to generate and/or assign an entity identifier (ID) to the entity in the common data format 152.

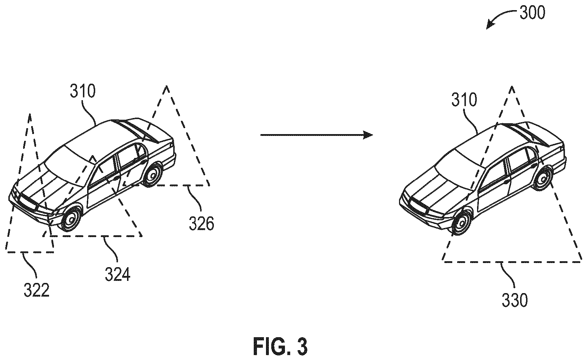

In some embodiments, the data fusion and correlation processor 114 is configured to perform data fusion and/or data correlation. In certain embodiments, the data fusion and correlation processor 114 can determine data inconsistency among a plurality of data assets (e.g., data asset from the data source 122, data asset from the data source 124, etc.). An example is illustrated in Figure 3. In some embodiments, the data fusion and correlation processor 114 can determine that a first data asset from the first data source (e.g., data source 122) and a second data asset from the second data source (e.g., data source 124) include different values for one or more object parameters (e.g., geospatial parameter, spectrum parameter, movement parameter, etc.). In certain embodiments, the data fusion and correlation processor 114 can determine that a plurality of data asset from respective data source (e.g., data source 122, data source 124, data source 126, data source 128, etc.) include different values for one or more object parameters (e.g., geospatial parameter, spectrum parameter, movement parameter, etc.).

In certain embodiments, the data fusion and correlation processor 114 can generate a unified data asset based on the plurality of data assets, where the unified data asset includes the deconflicted object properties (e.g., deconflicted values) for the one or more object parameters. In some examples, the deconflicted value of an object parameter is an average of values of the object parameter in the plurality of data assets. In certain examples, the deconflicted value of an object parameter is a weighted average of values of the object parameter in the plurality of data assets. In some examples, the deconflicted value of an object parameter is a value determined by a statistical analysis applying to the values of the object parameter in the plurality of data assets. In certain examples, the deconflicted value of an object parameter is a value determined by a machine learning model applying to the values of the object parameter in the plurality of data assets.

In some embodiments, the data fusion and correlation processor 114 could conduct a fusion and correlation process including fusion across data coming from similar sensors and data types. In certain embodiments, the fusion and correlation process could include fusion across data coming from similar sensors and data types from different vendors or versions. In some embodiments, the fusion and correlation process could include fusion across data coming from dissimilar sensors and dissimilar data types. In some embodiments, the fusion and correlation process could include fusion across data types coming in a different cadence or fidelity.

In certain embodiments, the data fusion and correlation processor 114 is configured to extract and/or generate one or more object properties of the entity (e.g., image embeddings, radar signature, etc.), also referred to as object characteristics, by analyzing one or more data assets from one or more data sources (e.g., data source 122), for example, a signature indicating the entity. In some embodiments, the object properties of the entity can include the image embeddings representing the entity, which are extracted from one or more images and/or videos. In certain embodiments, the embeddings are low-dimensional representations (e.g., vectors). In some embodiments, the object properties of the entity can include a signal signature associated with the entity, which is extracted and/or generated from one or more data assets. For example, the object properties of the entity can include a radar signature, Lidar (light detection and ranging) signature, and/or the like.

In certain embodiments, at least a part of the functionality of the SDSI framework is implemented in one or more data connectors 140. For example, the data connector 140 can perform data transformation to convert a data asset in a source data format 130 to a data asset in a common data format 152. In some embodiments, the data asset from the data source 120 and/or the data format 130 corresponds to a source data model. In certain embodiments, a data model includes metadata describing a data field used in a corresponding data format. In certain embodiments, the unified data asset and/or the common data format 152 corresponds to a unified data model. In some embodiments, the SDSI framework 110 can generate a data transformation based on the source data model and the unified data model, where the data transformation is to convert a source data format to the common data format. For example, the source data model includes a location property and the unified data model includes a latitude-longitude property. In certain embodiments, the data connector 140 can include the data transformation.

According to some embodiments, the SDSI framework 110 stores the unified data asset in the unified data asset repository 116. In certain embodiments, the SDSI framework 110 stores the raw data assets into the unified data asset repository 116. In some embodiments, the SDSI framework 110 creates a common understanding via the unified data assets. In certain embodiments, the SDSI framework 110 merges and deconflicts all available characteristics for a given entity (e.g., a detection) under a unique ID, and/or linking relevant information. In some embodiments, the SDSI framework 110 does not overwrite original data formats, such that applications and components will retain flexibility for other data paths to pull directly from sensors for workflows where this is a priority (e.g., automotive safety workflows, disaster workflows, etc.).

According to certain embodiments, the SDSI framework 110 can transmit and/or provide data assets to the one or more software applications 160, for example, via data connectors 140. In some examples, the SDSI framework 110 can transmit and/or provide one or more unified data assets in the common data format 152 to the software application 162, for example, via the data connector 146. In certain examples, the SDSI framework 110 can transmit and/or provide one or more unified data assets in the common data format 152 to the software application 164, for example, via the data connector 147. In some examples, the SDSI framework 110 can transmit and/or provide one or more unified data assets in the common data format 152 to the software application 166, for example, via the data connector 148. In certain embodiments, the one or more data connectors include one or more software interfaces (e.g., APIs). In some embodiments, the software application 168 is configured to retrieve data assets in source data format 138 from the unified data asset repository 116.

Once the unified data assets in the unified data asset repository 116 are established, in certain embodiments, the unified data assets can act as the foundational baseline to which modular applications can be rapidly connected or disconnected via open APIs. In some embodiments, this simplifies the system architecture by distilling hardware and software interdependencies into individual connections to the data asset via the SDSI framework 110.

According to some embodiments, the SDSI framework 110 reduces coupling between components (e.g., applications) and specific data formats by centralizing complex data tasks to produce a unified data asset (e.g., a core data asset) from which upstream models and applications can consume normalized data without the need of processing the data independently. As such, the elimination of redundant processing promotes the maximization of size, weight, power, and cost (SWAP-C) constraints, for example.

In certain embodiments, by automatically mapping and transforming incoming data to unified data assets (e.g., representing a unified view) which is accessible by any application, reasoning algorithm, or autonomy model, the SDSI framework 110 makes the totality of incoming signal immediately useful to applications within the ecosystem without further data modeling. In some embodiments, input agnosticism is an important capability and enables the applications and/or systems in the operating environment 100 to ingest a variety of sensor feeds in a variety of forms (e.g., video feeds in compressed and raw format).

According to some embodiments, the operating environment 100 allows new applications and capabilities to access the SDSI framework 110 as soon as they are connected to the SDSI framework 110. For example, the unified data assets (e.g., the common SDSI view) can also be applied across numerous physically distinct platforms, enabling greater component portability and reusability across the fleet.

According to certain embodiments, the SDSI framework 110 can generate a data asset based upon published software interfaces (e.g., APIs) for compatibility with any downstream model or application. In some embodiments, the SDSI framework 110 enables rapid capability integration by providing a useful connector layer (e.g., data connectors 140) to which applications, hardware, and consumer components can integrate with a single connection. In certain embodiments, the SDSI framework 110 creates a common layer which makes it easier for system-wide adherence to security and/or certification requirements.

According to some embodiments, the SDSI framework 110 can modify an underlying data model for data transformation such that it can flexibly evolve to accommodate new data types, concepts, and formats as they become available over time. For example, the SDSI framework can connect additional inflows of existing data formats which require no updates beyond authoring a new connection, and new data types can be accommodated without retooling the underlying system.

According to certain embodiments, the SDSI framework 110 is integrated with and/or coupled to a user interface (UI) that ties together the configuration and monitoring of the SDSI capability. In some embodiments, via the UI, users can directly manage the addition of new components to an existing platform - for example, by creating connections to external assets or configuring radios. Because the specifics of each connection are abstracted, in certain embodiments, users can learn to interact with a common workflow in the UI instead of the tracking bespoke configuration interfaces for each subcomponent. In some embodiments, the UI also provides a singular view through which users can drill down on the health and status of any individual system. In certain embodiments, the UI can reduce the complexity of managing the system from a user's perspective.

According to some embodiments, by reducing the complexity of inter-component dependencies, the operating environment 100 using the SDSI framework 110 also reduces the complexity of managing permissions and access control between components. As a result, the use of the SDSI framework 110 reduces vulnerability footprint and enables the system and/or environment 100 to manage security architecture more easily, rather than keeping track of an increasingly large number of connections across platform. In some examples, the SDSI framework 110 can propagate certain security measures across the systems integration operating environment 100. In certain examples, the SDSI framework 110 can also directly integrate with existing authorization and access control sources to implement centrally managed permissions and authorizations.

In certain embodiments, the use of the SDSI framework limits the amount of technical work required to integrate new capability. For example, adding a new sensor requires a single data integration pipeline, saving countless developer hours and eliminating hundreds of lines of glue code. In some embodiments, the use of the SDSI framework can reduce the cost of future applications by providing a common framework upon which new capability can be built and deployed.

In some embodiments, the SDSI framework can add and/or include a process including translation of a message. In certain embodiments, the SDSI framework can add and/or include a process including fusion of data across multiple sources. In some embodiments, the SDSI framework can add and/or include a process including advanced processing or normalization of data via algorithm. In certain embodiments, the SDSI framework can add and/or include a combination of any of the processes. In certain embodiments, the SDSI framework can enable simplified reconfiguration of SDSI by a developer by writing code, an analyst who uses a low-code environment, and/or or an end user who uses a user interface to alter system behavior as configuration.

In some embodiments, the repository (e.g., the raw data asset repository 112, the unified data asset repository 116, etc.) can include one or more data assets, one or more unified data assets, one or more data transformations, one or more data models, and/or the like. The repository may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In some cases, various components in the systems integration operating environment 100 can execute software or firmware stored in non-transitory computer-readable medium to implement various processing steps. Various components and processors of the systems integration operating environment 100 can be implemented by one or more computing devices including, but not limited to, circuits, a computer, a cloud-based processing unit, a processor, a processing unit, a microprocessor, a mobile computing device, and/or a tablet computer. In some cases, various components of the systems integration operating environment 100 (e.g., the one or more SDSI frameworks 110, the one or more data connectors 140, the one or more software applications 160) can be implemented on a shared computing device. Alternatively, a component of the operating environment 100 can be implemented on multiple computing devices. In some implementations, various modules and components of the operating environment 100 can be implemented as software, hardware, firmware, or a combination thereof. In some cases, various components of the systems integration operating environment 100 can be implemented in software or firmware executed by a computing device.

Various components of systems integration operating environment 100 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

Figure 2 is an illustrative systems integration operating environment 200 according to certain embodiments of the present disclosure. In some embodiments, the systems integration operating environment 200 includes one or more software defined systems integration (SDSI) frameworks (e.g., SDSI modules) 210, one or more data sources 220 (e.g., data source 222, data source 224, data source 226, data source 228), and one or more software applications 260. Although the above has been shown using a selected group of components in the systems integration operating environment 200, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to certain embodiments, the SDSI framework 210 includes similar functionality as the SDSI framework 110 illustrated in Figure 1. In some embodiments, a part or all of the data sources 220 are sensors 220 (e.g., sensor 222, sensor 224, sensor 226, sensor 228). In certain embodiments, source data assets from data sources 220 are provided to the one or more SDSI frameworks 210 via one or more data connectors 230. In some embodiments, the SDSI framework 210 is configured to generate a unified data asset 212 for an entity (e.g., a car, a vehicle, a building, etc.) based on the data assets from data sources 220. In certain examples, some of the data assets can be fed directly into the software application 260, for example, by a data connector 235. In some embodiments, the SDSI framework 210 is configured to provide the unified data asset 212 to one or more software applications 260, for example, via one or more data adapters 240.

According to certain embodiments, the unified data asset 212 includes core object properties 214 (e.g., entity characteristics, entity properties, etc.) and correlated object properties 216. In some embodiments, the core object properties 214 include an entity identifier (ID). In certain embodiments, the core object properties 214 include a geospatial value of the entity. In some embodiments, the correlated object properties 216 include one or more signal signatures associated with the entity (e.g., radar signature, Lidar signature) that are generated and/or extracted from the source data assets.

According to some embodiments, sensor 228 (e.g., data source 228) is added to the systems integration operating environment 200. In certain embodiments, the SDSI framework 210 is configured to generate a new data connector corresponding to the data asset from sensor 228, for example, based on the sensor data asset (e.g., sensor data stream) and/or sensor data format. In some embodiments, the new data connector is generated by a language model.

According to certain embodiments, the SDSI framework 210 is configured to use the data asset from the sensor 228 to generate and/or update the core object properties 214 and/or the correlated object properties 216. In some embodiments, one or more core object properties 214 are updated based at least in part on the data assets from the sensor 228 and/or other data assets from the other sensors 220. For example, the entity location is updated based on the data in the data asset from the sensor 228. In certain embodiments, one or more correlated object properties 216 are updated and/or added based at least in part on the data assets from the sensor 228. For example, the correlated object properties 216 is added with "Entity data X" that is generated and/or extracted from the data asset from the sensor 228.

Figure 3 is an illustrative example of data fusion and correlation process 300 (e.g., implemented by the data fusion and correlation processor 114) according to certain embodiments of the present disclosure. In this example, an entity 310 are associated with three source data assets 322, 324, and 326. In some embodiments, the unified data asset 330 associated with the entity 310 is determined based on the data assets 322, 324, and 326.

In certain embodiments, the data fusion and correlation process 300 includes a process of determining a plurality of data assets (e.g., data assets 322, 324, 326) associated with the entity 310, for example, based upon one or more object parameters. In some embodiments, the one or more object parameters include at least one selected from a group consisting of a location parameter, a geospatial parameter, a temporal parameter, a speed parameter, an orientation parameter, a movement parameter, a shape parameter, a spectrum parameter, an object image parameter, and/or the like. In certain examples, the data fusion and correlation process 300 includes a process of generating and/or assigning an entity identifier (ID) to the entity.

In some embodiments, the data fusion and correlation process 300 includes a process of determining data inconsistency among a plurality of data assets (e.g., data assets 322, 324, 326, etc.). In certain embodiments, the data fusion and correlation process 300 includes a process of determining that the plurality of data assets 322, 324, and 326 include different values for one or more object parameters (e.g., geospatial parameter, spectrum parameter, movement parameter, etc.).

In certain embodiments, the data fusion and correlation process 300 includes a process of generating the unified data asset 330 based on the plurality of data assets 322, 324, 326, where the unified data asset 330 includes the deconflicted object properties (e.g., deconflicted values) for the one or more object parameters. In some examples, the deconflicted value of an object parameter is an average of values of the object parameter in the plurality of data assets. In certain examples, the deconflicted value of an object parameter is a weighted average of values of the object parameter in the plurality of data assets. In some examples, the deconflicted value of an object parameter is a value determined by a statistical analysis applying to the values of the object parameter in the plurality of data assets. In certain examples, the deconflicted value of an object parameter is a value determined by a machine learning model applying to the values of the object parameter in the plurality of data assets.

In some embodiments, the data fusion and correlation process 300 includes fusion across data coming from similar sensors and data types. In certain embodiments, the data fusion and correlation process 300 includes fusion across data coming from similar sensors and data types from different vendors or versions. In some embodiments, the fusion and correlation process could include fusion across data coming from dissimilar sensors and dissimilar data types. In some embodiments, the data fusion and correlation process 300 could include fusion across data types coming in a different cadence or fidelity.

In certain embodiments, the data fusion and correlation process 300 includes a process of extracting and/or generating one or more object properties of the entity 310 (e.g., image embeddings, radar signature, etc.), also referred to as object characteristics, by analyzing one or more data assets 322, 324, and 326. In some embodiments, the object properties of the entity can include the image embeddings representing the entity, which are extracted from one or more images and/or videos. In certain embodiments, the embeddings are low-dimensional representations (e.g., vectors). In some embodiments, the object properties of the entity can include a signal signature associated with the entity, which is extracted and/or generated from one or more data assets. For example, the object properties of the entity can include a radar signature, Lidar (light detection and ranging) signature, and/or the like.

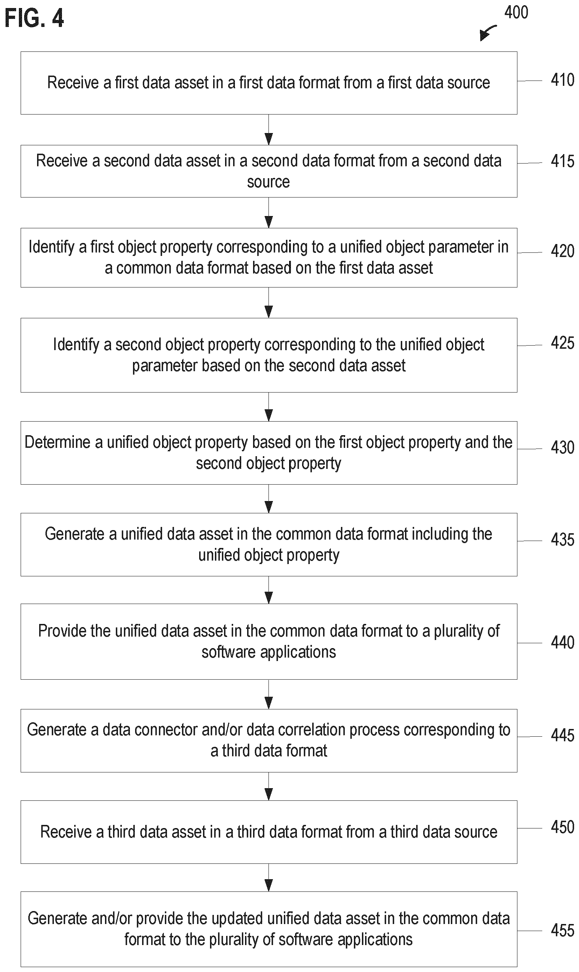

Figure 4 is a simplified diagram showing a method 400 for systems integration using software defined systems integration modules according to certain embodiments of the present disclosure. This diagram is merely an example. One of ordinary skill in the art would recognize many variations, alternatives, and modifications. The method 400 for systems integration includes processes 410, 415, 420, 425, 430, 435, 440, 445, 450, and 455. Although the above has been shown using a selected group of processes for the method 400 for systems integration, there can be many alternatives, modifications, and variations. For example, some of the processes may be expanded and/or combined. Other processes may be inserted to those noted above. Depending upon the embodiment, the sequence of processes may be changed, and one or more processes may be replaced. Further details of these processes are found throughout the present disclosure.

In some embodiments, some or all processes (e.g., steps) of the method 400 are performed by a system (e.g., the computing system 500, the SDSI framework 110). In certain examples, some or all processes (e.g., steps) of the method 400 are performed by a computer and/or a processor directed by a code. For example, a computer includes a server computer and/or a client computer (e.g., a personal computer). In some examples, some or all processes (e.g., steps) of the method 400 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 410, the system receives a first data asset in a first data format from a first data source (e.g., a sensor). In certain embodiments, at process 415, the system receives a second data asset in a second data format from a second data source. In some embodiments, the second data format is different from the first data format and the second data source is different from the first data source. In certain embodiments, the first data source is associated with a first sensor and the second data source is associated with a second sensor. In some embodiments, the first data source is associated with a first sensor type and the second data source is associated with a second sensor type. For example, the sensor type can be an image sensor, a radar sensor, a Lidar sensor, a motion sensor, and/or the like.

According to certain embodiments, at process 420, the system identifies a first object property corresponding to a unified object parameter (e.g., a location parameter, a movement parameter, etc.) in a common data format based on the first data asset, wherein the common data format is different from the first data format. In some embodiments, at process 425, the system identifies a second object property corresponding to the unified object parameter based on the second data asset, wherein the common data format is different from the second data format. In certain embodiments, at process 430, the system determines a unified object property corresponding to the unified object parameter based on the first object property and the second object property.

According to some embodiments, at process 435, the system determines one or more other unified object properties and generates a unified data asset in the common data format, including one or more unified object properties. In some embodiments, the system performs a correlation process to merge the first data asset in the first data format and the second data asset in the second data format to generate the unified data asset in the common data format.

According to certain embodiments, the system applies a statistical analysis (e.g., a medium analysis, a distribution analysis, etc.) or a computational operation (e.g., an average, a weighted average, etc.) to the first object property and the second object property to determine the unified data property. In some embodiments, the system applies a machine-learning model to the first object property and the second object property to determine the unified data property. In certain embodiments, the system determines a first object property (e.g., an image embedding) corresponding to a unified object parameter in the common data format based on the first data asset, where the unified data asset includes the first object property. In some embodiments, at process 440, the system provides the unified data asset in the common data format to a plurality of software applications, for example, via a plurality of data connectors.

According to certain embodiments, the system receives source data assets (e.g., the first data asset, the second data asset, etc.) via a source data connector. In some embodiments, the source data connector is configured to transform at least a part of data in the source data asset to the common data format. In certain embodiments, the system generates the source data connector and/or the data correlation process (e.g., a data correlation software module, the data correlation process to be added to the data fusion and correlation process 300) via a language model based on the source data format and the common data format. In some embodiments, the system obtains a source data model corresponding to the source data format and a unified data model corresponding to the common data format, and generates the source data connector and/or data correlation process via a language model based on the source data model and the common data model. In certain embodiments, the language model is designed to generate data correlation software code and trained using historical data assets and existing data correlation processes (e.g., data correlation software modules).

According to some embodiments, at process 445, the system generates a third data connector and/or a data correlation process based on a third data format, for example, in response to an indication of adding a third data source. In certain embodiments, at process 450, the system receives a third data asset in the third data format from the third data source, for example, via the third data connector. In some embodiments, the third data source is different from the first data source and the third data source is different from the second data source. In certain embodiments, at process 455, the system generates and/or provides an updated unified data asset in the common data format based at least in part on the third data asset to the plurality of software applications. In some embodiments, the system updates the common data format after receiving the third data format.

According to certain embodiments, the system receives a request from a new application, where the new application is different from any one of the plurality of software applications. In some embodiments, the system generates a new data connector for the new application; and provides the unified data asset to the new application via the new data connector. In certain embodiments, the new data connector is generated by a language model. In some embodiments, the system may include multiple independent platforms that are operating synchronously. For example, multiple UAV's that each may or may not have their own SDSI and then a system that allows for multiple platforms or SDSI systems to be integrated.

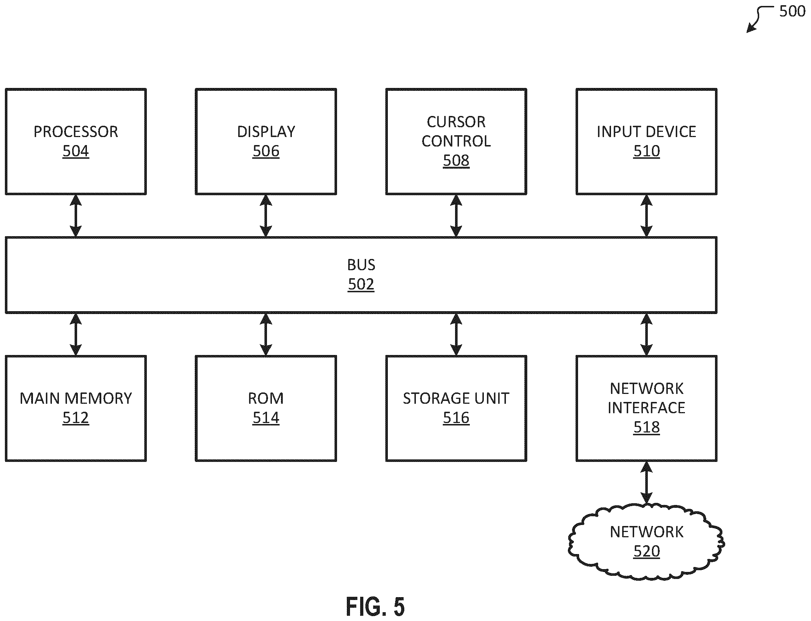

Figure 5 is a simplified diagram showing a computing system for implementing a system 500 for systems integration using an SDSI framework in accordance with at least one example set forth in the disclosure. This diagram is merely an example, which should not unduly limit the scope of the claims. One of ordinary skill in the art would recognize many variations, alternatives, and modifications.

The computing system 500 includes a bus 502 or other communication mechanism for communicating information, a processor 504, a display 506, a cursor control component 508, an input device 510, a main memory 512, a read only memory (ROM) 514, a storage unit 516, and a network interface 518. In some embodiments, some or all processes (e.g., steps) of the method 400 are performed by the computing system 500. In some examples, the bus 502 is coupled to the processor 504, the display 506, the cursor control component 508, the input device 510, the main memory 512, the read only memory (ROM) 514, the storage unit 516, and/or the network interface 518. In certain examples, the network interface is coupled to a network 520. For example, the processor 504 includes one or more general purpose microprocessors. In some examples, the main memory 512 (e.g., random access memory (RAM), cache and/or other dynamic storage devices) is configured to store information and instructions to be executed by the processor 504. In certain examples, the main memory 512 is configured to store temporary variables or other intermediate information during execution of instructions to be executed by processor 504. For examples, the instructions, when stored in the storage unit 516 accessible to processor 504, render the computing system 500 into a special-purpose machine that is customized to perform the operations specified in the instructions. In some examples, the ROM 514 is configured to store static information and instructions for the processor 504. In certain examples, the storage unit 516 (e.g., a magnetic disk, optical disk, or flash drive) is configured to store information and instructions.

In some embodiments, the display 506 (e.g., a cathode ray tube (CRT), an LCD display, or a touch screen) is configured to display information to a user of the computing system 500. In some examples, the input device 510 (e.g., alphanumeric and other keys) is configured to communicate information and commands to the processor 504. For example, the cursor control component 508 (e.g., a mouse, a trackball, or cursor direction keys) is configured to communicate additional information and commands (e.g., to control cursor movements on the display 506) to the processor 504.

According to certain embodiments, a method for systems integration, the method comprising: receiving a first data asset in a first data format from a first data source; receiving a second data asset in a second data format from a second data source, the second data format being different from the first data format, the second data source being different from the first data source; performing a correlation process to merge the first data asset in the first data format and the second data asset in the second data format to generate a unified data asset in a common data format, the common data format being different from the first data format, the common data format being different from the second data format; and providing the unified data asset in the common data format to a plurality of software applications; wherein the method is performed by one or more processors. For example, the method is implemented according to at least Figure 1, Figure 2, Figure 3, and/or Figure 4.

In some embodiments, the first data source is associated with a first sensor and the second data source is associated with a second sensor. In certain embodiments, the first data source is associated with a first sensor type and the second data source is associated with a second sensor type. the receiving a first data asset in a first data format from a first data source comprises receiving the first data asset via a first data connector. In some embodiments, the first data connector is configured to transform at least a part of data in the first data asset to the common data format. In certain embodiments, the method further comprises: generating the first data connector via a language model based on the first data format and the common data format.

In some embodiments, the method further comprises: obtaining a first data model associated with the first data format; obtaining a unified data model associated with the common data format; and generating the first data connector via a language model based on the first data model and the common data model. In certain embodiments, the performing a correlation process to merge the first data asset in the first data format and the second data asset in the second data format includes: identifying a first object property corresponding to a unified object parameter in the common data format based on the first data asset; identifying a second object property corresponding to the unified object parameter based on the second data asset; and determining a unified object property based on the first object property and the second object property; wherein the unified data asset includes the unified object property.

In some embodiments, the determining a unified object property based on the first object property and the second object property includes applying a statistical analysis to the first object property and the second object property to determine the unified object property. In certain embodiments, the determining a unified object property based on the first object property and the second object property includes applying a machine-learning model to the first object property and the second object property to determine the unified object property. the performing a correlation process to merge the first data asset in the first data format and the second data asset in the second data format includes: determining a first object property corresponding to a unified object parameter in the common data format based on the first data asset; and wherein the unified data asset includes the first object property.

**In** some embodiments, the method further comprises: receiving a third data asset in a third data format from a third data source, the third data source being different from the first data source, the third data source being different from the second data source; generating an updated unified data asset based at least in part on the third data asset; and providing the updated unified data asset to the plurality of software applications. In certain embodiments, the method further comprises: generating a third data connector based on the third data format; wherein the receiving a third data asset including receiving the third data asset via the third data connector. In some embodiments, the method further comprises: receiving a request from a new application, the new application being different from any one of the plurality of software applications; generating a new data connector for the new application; and providing the unified data asset to the new application via the new data connector. In certain embodiments, the new data connector is generated by a language model.

According to certain embodiments, a system for systems integration, the system comprising: one or more memories comprising instructions stored thereon; and one or more processors configured to execute the instructions and perform operations comprising: receiving a first data asset in a first data format from a first data source; receiving a second data asset in a second data format from a second data source, the second data format being different from the first data format, the second data source being different from the first data source; performing a correlation process to merge the first data asset in the first data format and the second data asset in the second data format to generate a unified data asset in a common data format, the common data format being different from the first data format, the common data format being different from the second data format; and providing the unified data asset in the common data format to a plurality of software applications. For example, the system is implemented according to at least Figure 1, Figure 2, Figure 3, and/or Figure 4.

In some embodiments, the first data source is associated with a first sensor and the second data source is associated with a second sensor. In certain embodiments, the first data source is associated with a first sensor type and the second data source is associated with a second sensor type. the receiving a first data asset in a first data format from a first data source comprises receiving the first data asset via a first data connector. In some embodiments, the first data connector is configured to transform at least a part of data in the first data asset to the common data format. In certain embodiments, the operations further comprise: generating the first data connector via a language model based on the first data format and the common data format.

In some embodiments, the operations further comprise: obtaining a first data model associated with the first data format; obtaining a unified data model associated with the common data format; and generating the first data connector via a language model based on the first data model and the common data model. In certain embodiments, the performing a correlation process to merge the first data asset in the first data format and the second data asset in the second data format includes: identifying a first object property corresponding to a unified object parameter in the common data format based on the first data asset; identifying a second object property corresponding to the unified object parameter based on the second data asset; and determining a unified object property based on the first object property and the second object property; wherein the unified data asset includes the unified object property.

In some embodiments, the determining a unified object property based on the first object property and the second object property includes applying a statistical analysis to the first object property and the second object property to determine the unified object property. In certain embodiments, the determining a unified object property based on the first object property and the second object property includes applying a machine-learning model to the first object property and the second object property to determine the unified object property. the performing a correlation process to merge the first data asset in the first data format and the second data asset in the second data format includes: determining a first object property corresponding to a unified object parameter in the common data format based on the first data asset; and wherein the unified data asset includes the first object property.

In some embodiments, the operations further comprise: receiving a third data asset in a third data format from a third data source, the third data source being different from the first data source, the third data source being different from the second data source; generating an updated unified data asset based at least in part on the third data asset; and providing the updated unified data asset to the plurality of software applications. In certain embodiments, the operations further comprise: generating a third data connector based on the third data format; wherein the receiving a third data asset including receiving the third data asset via the third data connector. In some embodiments, the operations further comprise: receiving a request from a new application, the new application being different from any one of the plurality of software applications; generating a new data connector for the new application; and providing the unified data asset to the new application via the new data connector. In certain embodiments, the new data connector is generated by a language model.

According to certain embodiments, a non-transitory computer readable storage medium including instructions for systems integration that, when executed by one or more processors, cause the one or more processors to perform operations comprising: receiving a first data asset in a first data format from a first data source; receiving a second data asset in a second data format from a second data source, the second data format being different from the first data format, the second data source being different from the first data source; performing a correlation process to merge the first data asset in the first data format and the second data asset in the second data format to generate a unified data asset in a common data format, the common data format being different from the first data format, the common data format being different from the second data format; and providing the unified data asset in the common data format to a plurality of software applications. For example, the non-transitory computer readable storage medium is implemented according to at least Figure 1, Figure 2, Figure 3, and/or Figure 4.

In some embodiments, the first data source is associated with a first sensor and the second data source is associated with a second sensor. In certain embodiments, the first data source is associated with a first sensor type and the second data source is associated with a second sensor type. the receiving a first data asset in a first data format from a first data source comprises receiving the first data asset via a first data connector. In some embodiments, the first data connector is configured to transform at least a part of data in the first data asset to the common data format. In certain embodiments, the operations further comprise: generating the first data connector via a language model based on the first data format and the common data format.

In some embodiments, the operations further comprise: obtaining a first data model associated with the first data format; obtaining a unified data model associated with the common data format; and generating the first data connector via a language model based on the first data model and the common data model. In certain embodiments, the performing a correlation process to merge the first data asset in the first data format and the second data asset in the second data format includes: identifying a first object property corresponding to a unified object parameter in the common data format based on the first data asset; identifying a second object property corresponding to the unified object parameter based on the second data asset; and determining a unified object property based on the first object property and the second object property; wherein the unified data asset includes the unified object property.

In some embodiments, the determining a unified object property based on the first object property and the second object property includes applying a statistical analysis to the first object property and the second object property to determine the unified object property. In certain embodiments, the determining a unified object property based on the first object property and the second object property includes applying a machine-learning model to the first object property and the second object property to determine the unified object property. the performing a correlation process to merge the first data asset in the first data format and the second data asset in the second data format includes: determining a first object property corresponding to a unified object parameter in the common data format based on the first data asset; and wherein the unified data asset includes the first object property.

In some embodiments, the operations further comprise: receiving a third data asset in a third data format from a third data source, the third data source being different from the first data source, the third data source being different from the second data source; generating an updated unified data asset based at least in part on the third data asset; and providing the updated unified data asset to the plurality of software applications. In certain embodiments, the operations further comprise: generating a third data connector based on the third data format; wherein the receiving a third data asset including receiving the third data asset via the third data connector. In some embodiments, the operations further comprise: receiving a request from a new application, the new application being different from any one of the plurality of software applications; generating a new data connector for the new application; and providing the unified data asset to the new application via the new data connector. In certain embodiments, the new data connector is generated by a language model.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented for example as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated.

## Claims

1. A method (400) for systems integration, the method comprising:
receiving (410) a first data asset in a first data format from a first data source;
receiving (415) a second data asset in a second data format from a second data source, the second data format being different from the first data format, the second data source being different from the first data source;
performing a correlation process to merge the first data asset in the first data format and the second data asset in the second data format to generate (435) a unified data asset in a common data format, the common data format being different from the first data format, the common data format being different from the second data format; and
providing (440) the unified data asset in the common data format to a plurality of software applications;
wherein the method is performed by one or more processors.

2. The method of claim 1, wherein the first data source is associated with a first sensor and the second data source is associated with a second sensor.

3. The method of claim 1, wherein the first data source is associated with a first sensor type and the second data source is associated with a second sensor type.

4. The method of any preceding claim, wherein the receiving a first data asset in a first data format from a first data source comprises receiving the first data asset via a first data connector.

5. The method of claim 4, wherein the first data connector is configured to transform at least a part of data in the first data asset to the common data format.

6. The method of claim 5, further comprising: generating the first data connector via a language model based on the first data format and the common data format.

7. The method of claim 5, further comprising:
obtaining a first data model associated with the first data format;
obtaining a unified data model associated with the common data format; and
generating the first data connector via a language model based on the first data model and the unified data model.

8. The method of any preceding claim, wherein the performing a correlation process to merge the first data asset in the first data format and the second data asset in the second data format includes:
identifying a first object property corresponding to a unified object parameter in the common data format based on the first data asset;
identifying a second object property corresponding to the unified object parameter based on the second data asset; and
determining a unified object property based on the first object property and the second object property;
wherein the unified data asset includes the unified object property.

9. The method of claim 8, wherein the determining a unified object property based on the first object property and the second object property includes applying a statistical analysis to the first object property and the second object property to determine the unified object property.

10. The method of claim 8, wherein the determining a unified object property based on the first object property and the second object property includes applying a machine-learning model to the first object property and the second object property to determine the unified object property.

11. The method of any of claims 1 to 7, wherein the performing a correlation process to merge the first data asset in the first data format and the second data asset in the second data format includes:
determining a first object property corresponding to a unified object parameter in the common data format based on the first data asset; and
wherein the unified data asset includes the first object property.

12. The method of any preceding claim, further comprising:
receiving a third data asset in a third data format from a third data source, the third data source being different from the first data source, the third data source being different from the second data source;
generating an updated unified data asset based at least in part on the third data asset; and
providing the updated unified data asset to the plurality of software applications,
wherein optionally the method further comprises:
generating a third data connector based on the third data format,
wherein the receiving a third data asset including receiving the third data asset via the third data connector.

13. The method of any preceding claim, further comprising:
receiving a request from a new application, the new application being different from any one of the plurality of software applications;
generating a new data connector for the new application, wherein optionally the new data connector is generated by a language model; and
providing the unified data asset to the new application via the new data connector.

14. A system for systems integration, the system comprising:
one or more memories comprising instructions stored thereon; and
one or more processors configured to execute the instructions for performing the method of any preceding claim.

15. A non-transitory computer readable storage medium including instructions for systems integration that, when executed by one or more processors, cause the one or more processors to perform the method of any preceding claim.
